# EUROPEAN PATENT SPECIFICATION

(11) **EP 2 743 158 B1**
(45) Date of publication and mention of the grant of the patent: **04.10.2017**
(21) Application number: 12822950.7
(22) Date of filing: 02.08.2012
(51) Int. Cl.: B62D 25/08

(54) **STRUCTURE FOR SUPPORTING SUSPENSION DEVICES FOR VEHICLE**
TRÄGERSTRUKTUR FÜR FAHRZEUGAUFHÄNGUNGSVORRICHTUNGEN
STRUCTURE DE SUPPORT DE DISPOSITIFS DE SUSPENSION POUR VÉHICULE

(30) Priority: 09.08.2011 JP 2011174154
(43) Date of publication of application: 18.06.2014
(73) Proprietor: Toyota Shatai Kabushiki Kaisha, Kariya-shi Aichi 448-8666 (JP)
(72) Inventor: TAKAO, Junko, Kariya-shi Aichi 448-8666 (JP); KAMIMURA, Kenichi, Kariya-shi Aichi 448-8666 (JP); MIZUSAKI, Takao, Kariya-shi Aichi 448-8666 (JP); ARIYOSHI, Ryousuke, Kariya-shi Aichi 448-8666 (JP)
(74) Representative: Appleyard Lees IP LLP
(86) International application number: PCT/JP2012/069683
(87) International publication number: WO 2013/021904

(56) References cited:
- JP-A- 1 036 582
- JP-A- 7 276 946
- JP-A- 8 142 909
- JP-A- 2004 255 963
- JP-A- 2007 191 061
- JP-U- H 035 687
- JP-U- 60 157 480
- US-A1- 2010 019 539

## Description

### TECHNICAL FIELD

The present invention relates to a support structure for a vehicle suspension device that couples the upper end of a suspension device, such as a shock absorber and a suspension spring, to the body frame of a vehicle.

### BACKGROUND ART

Conventionally, the upper end of a shock absorber or a suspension spring is coupled to the body frame of a vehicle and the lower end is coupled to a wheel support member, such as a suspension arm.

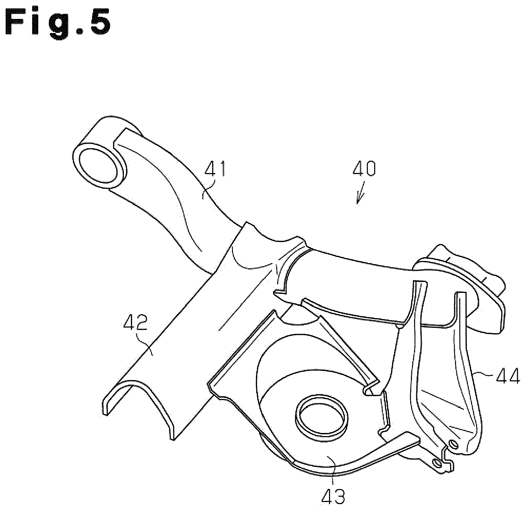

The upper end of a shock absorber or a suspension spring is coupled to the vehicle body frame via a plate-like receiving member welded to the vehicle body frame, as described in for example, Patent Document 1. The lower end of the shock absorber or the suspension spring is coupled to a torsion beam suspension device 40, which is illustrated in Fig. 5, via a receiving member 43 welded to the torsion beam suspension device 40. The torsion beam suspension device 40 is formed substantially in an H shape using a pair of, left and right, suspension arms 41 and a torsion beam 42, which couples the middle portions of the suspension arms 41 to each other. The receiving member 43 is welded to the inner side of a corner portion formed by the torsion beam 42 and the corresponding one of the suspension arms 41. More specifically, the front portion of the receiving member 43 is welded directly to the torsion beam 42 and a corresponding side portion of the receiving member 43 is welded to the suspension arm 41 via a support bracket 44 of the shock absorber.

US 2010/0019539 A1 describes a work vehicle having a vehicle body frame including a front frame and a rear frame. JP 2004 255963 A describes an operation section structure of a working vehicle including a handrail installed at the operation section.

### PRIOR ART DOCUMENTS

Patent Document 1: Japanese Laid-Open Utility Model Publication No. 59-113212
Patent Document 2: Japanese Laid-Open Patent Publication No. 2006-182141

### SUMMARY OF THE INVENTION

### Problems that the Invention is to Solve

When a vehicle travels, the left and right shock absorbers and suspension springs apply force to the vehicle body frame typically with great force difference between the left side and the right side. The torsion beam suspension device 40 of Patent Document 2 absorbs such great force difference between the left and right sides, which is applied from the left and right shock absorbers and suspension springs, through torsion of the torsion beam 42.

It is now supposed that, in the configuration described in Patent Document 1, the receiving member is welded to a corner portion of the vehicle body frame, and the upper ends of the corresponding shock absorber and suspension spring are coupled to the vehicle body frame through the receiving member. In this configuration, when the left and right shock absorbers and springs apply force to the vehicle body frame with great difference between the left side and the right side, the vehicle body frame may flex in a twisting manner. This may hamper generation of the effective reactive force that should be applied from the vehicle body frame to the shock absorbers and the suspension springs, thus affecting the road hugging property of the wheels and then the steering stability of the vehicle. To restrict the aforementioned flexure of the vehicle body frame, certain components of the vehicle body frame or the receiving member may be formed with increased thicknesses. However, this increases the weight of the vehicle body.

Accordingly, it is an objective of the present invention to provide a support structure for a vehicle suspension device that solves the above-described problem, or restricts flexure of a vehicle body frame caused by force applied by a shock absorber and a suspension spring without increasing the weight of the vehicle body.

### Means for Solving the Problems

To achieve the foregoing objective and in accordance with one aspect of the present invention, a support structure for a vehicle suspension device is provided in which an upper end of a shock absorber or a suspension spring is coupled to a receiving member fixed to a vehicle body frame. The vehicle body frame includes a lower frame member having a rectangular cross-section and an upper frame member located above the lower frame member. The upper frame member has a substantially inverted-U-shaped first frame portion mounted upright on the lower frame member, a substantially U-shaped second frame portion extending forward from a middle portion of the first frame portion in an up-and-down direction, and a third frame portion mounted upright on the lower frame member to support a front portion of the second frame portion. The vehicle body frame includes a closed loop portion having a corner portion. The closed loop portion is configured by the second frame portion and an upper portion of the first frame portion. The receiving member is fixed to the corner portion of the loop portion at a front portion and a side portion of the receiving member or at a rear portion and a side portion of the receiving member.

In this configuration, even when the left and right shock absorbers or suspension springs apply force to the vehicle body frame with great difference between the left side and the right side, the loop portion of the vehicle body frame is rigid to such an extent that effective reactive force is applied to both the left and right shock absorbers or suspension springs. This makes it unnecessary to increase the thickness of the vehicle body frame or the thickness of the receiving member to restrict the flexure of the vehicle body frame caused by the force applied by the shock absorbers or the suspension springs. In other words, the flexure of the vehicle body frame caused by the force applied by the shock absorbers or suspension springs is restricted without increasing the weight of the vehicle body. As a result, desirable road hugging property of the left and right wheels is ensured, and steering stability is maintained in a desired state.

The receiving member is preferably fixed to an inner side of the corner portion. In this configuration, the receiving member is restrained by the corner portion from outside in the vehicle width direction. The receiving member is thus not easily deformed by the upward force applied by the shock absorbers or the suspension springs. This limits displacement of the upper ends of the shock absorbers or the suspension springs relative to the vehicle body frame, thus improving the road hugging property of the wheels.

The upper frame member, second frame portion and third frame portion are preferably formed by a tubular member having a closed cross section. In this configuration, the loop portion of the vehicle body frame has effective rigidity with respect to the force applied by the left and right shock absorbers or suspension springs.

The tubular member is preferably a round pipe. In this configuration, the vehicle body frame is easily manufactured by bending a round pipe.

### Effects of the Invention

The present invention provides a support structure for a vehicle suspension device that restricts flexure of a vehicle body frame caused by force applied by a shock absorber and a suspension spring without increasing the weight of the vehicle body.

### BRIEF DESCRIPTION OF THE DRAWINGS

Fig. 1 is a perspective view showing a support structure for a vehicle suspension device according to an embodiment of the present invention;
Fig. 2 is a perspective view showing a vehicle body frame and a receiving member;
Fig. 3 is a plan view showing a receiving member welded to a corner portion of the vehicle body frame;
Fig. 4 is a perspective view showing a support structure for a vehicle suspension device according to another embodiment of the present invention; and
Fig. 5 is a perspective view showing a conventional support structure for a suspension device.

### MODES FOR CARRYING OUT THE INVENTION

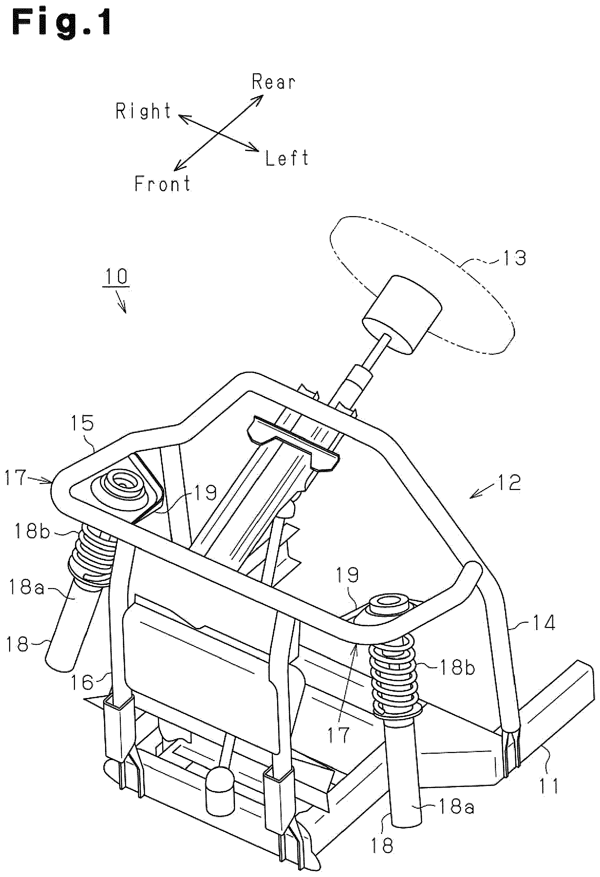

A support structure for a vehicle suspension device according to one embodiment of the present invention will now be described with reference to Figs. 1 to 3.

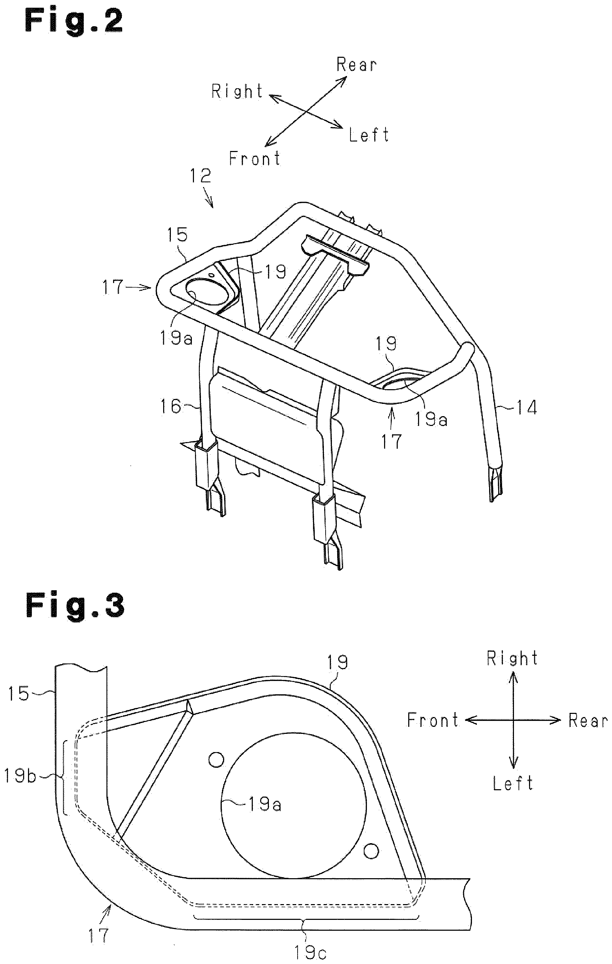

Figs. 1 and 2 each illustrate a front portion of a vehicle body frame 10 of a vehicle. The vehicle body frame 10 has a lower frame member 11 formed using a material with a rectangular cross section and an upper frame member 12, which is attached to and arranged above the lower frame member 11 through welding or bolt fastening. The upper frame member 12 has a closed loop portion. In the illustrated embodiment, the upper frame member 12 is formed using a round pipe, which is a tubular member having a closed cross section. However, the upper frame member 12 may be formed using a rectangular pipe, which is also a tubular member with a closed cross section. A steering device 13 is mounted in the front portion of the vehicle body frame 10.

The upper frame member 12 has a first frame portion 14, which configures a rear portion of the upper frame member 12. The first frame portion 14 substantially has an inverted U shape and is mounted upright on the lower frame member 11. The rest of the upper frame member 12 is configured by a second frame portion 15 and a third frame portion 16. The second frame portion 15 is a substantially U-shaped portion extending forward from the middle portion of the first frame portion 14 in the up-and-down direction. The third frame portion 16 is a portion mounted upright on the lower frame member 11 to support a front portion of the second frame portion 15. The third frame portion 16 is formed by joining a pair of, left and right, pillar-like members to each other using a plate-like joint member. The closed loop portion is configured by the second frame portion 15 and an upper portion of the first frame portion 14.

A pair of, left and right, corner portions 17 are formed in the front portion of the second frame portion 15 at the opposite sides of the vehicle width direction. A receiving member 19 for joining the upper end of a corresponding suspension unit 18 to the vehicle body frame 10 is arranged at the inner side of each of the corner portions 17. Each of the suspension units 18 is an integral body formed by a shock absorber 18a and a suspension spring 18b.

With reference to Fig. 3, each receiving member 19 is formed through pressing a plate material. An attachment hole 19a is formed in a central portion of the receiving member 19. The upper end of each suspension unit 18 is passed through the attachment hole 19a and attached fixedly to the corresponding receiving member 19. Each receiving member 19 is fixed to the inner side of the corresponding corner portion 17 of the second frame portion 15 through welding at a front portion 19b and a side portion 19c of the receiving member 19.

Operation of the support structure for the vehicle suspension device, which is configured in the above-described manner, will hereafter be described.

When the vehicle travels, each of the left and right suspension units 18 applies upward force to the corresponding one of the receiving members 19. The upward force acts on each corner portion 17 of the second frame portion 15 through the front portion 19b and the side portion 19c of the corresponding receiving member 19. Specifically, if the force applied from the left suspension unit 18 to the corresponding receiving member 19 is greater than the force applied from the right suspension unit 18 to the corresponding receiving member 19, the second frame portion 15 receives such torsion force that the left corner portion 17 and its adjacent components are raised with respect to the right corner portion 17 and its adjacent components. However, the closed loop portion, which is formed by the second frame portion 15 and the upper portion of the first frame portion 14, restricts flexure of the vehicle body frame 10 against the aforementioned torsion force. As a result, effective reactive force is applied also to the left suspension unit 18, and the road hugging property of the left and right wheels is ensured in a desired manner.

The illustrated embodiment has the advantages described below.
(1) Each receiving member 19, to which the upper end of the corresponding suspension unit 18 is coupled, is fixed to the corresponding corner portion 17, which is formed in the loop portion of the vehicle body frame 10, at the front portion 19b and the side portion 19c of the receiving member 19. As a result, even when the left and right suspension units 18 apply force to the vehicle body frame 10 with great force difference between the left side and the right side, the loop portion of the vehicle body frame 10 is rigid to such an extent that effective reactive force is applied to each one of the left and right suspension units 18. This makes it unnecessary to increase the thickness of the vehicle body frame 10 or the thickness of each receiving member 19 to restricts the flexure of the vehicle body frame 10 caused by the force applied by the suspension units 18. In other words, the flexure of the vehicle body frame 10 caused by the force applied by the suspension units 18 is restricted without increasing the weight of the vehicle body. The road hugging property of the left and right wheels is thus ensured in a desired manner, and the steering stability is maintained in a desired state.
(2) Each receiving member 19 is fixed to the inner side of the corresponding corner portion 17. The receiving member 19 is thus restrained by the corner portion 17 from outside in the vehicle width direction. The receiving member 19 is thus not easily deformed by the upward force applied by the corresponding suspension unit 18. This limits displacement of the upper ends of the suspension units 18 relative to the vehicle body frame 10, thus improving the road hugging property of the wheels.
(3) The vehicle body frame 10 is formed by a round pipe, which is a tubular member having a closed cross section. As a result, the loop portion of the vehicle body frame 10 ensures effective rigidity against the force applied by the left and right suspension units 18.

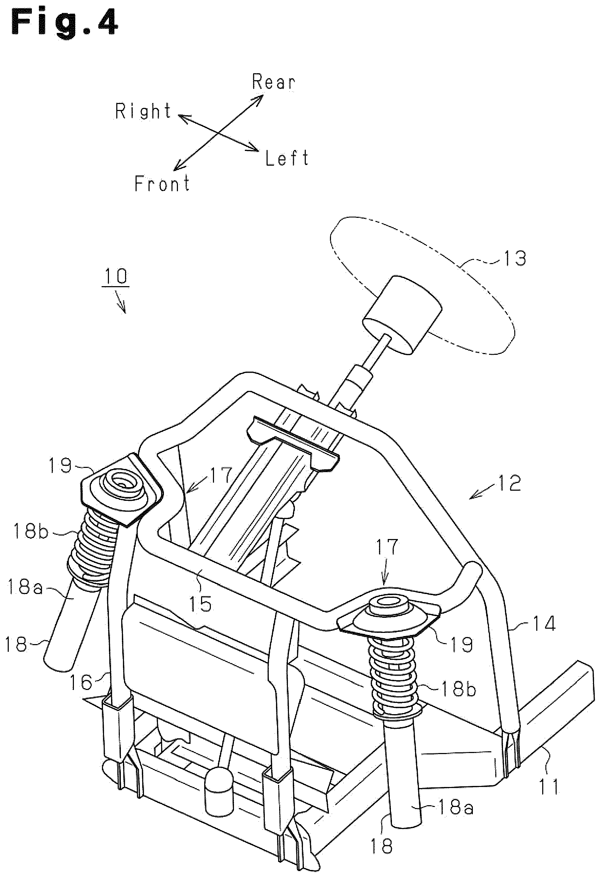

The present invention is not restricted to the illustrated embodiment but may be embodied in the modified forms described below.
- In the illustrated embodiment, each receiving member 19 is fixed to the corresponding corner portion 17 at the inner side of the loop portion formed by the second frame portion 15 and the upper portion of the first frame portion 14. However, the receiving member 19 may be fixed to the corner portion 17 at the outer side of the loop portion. In this case, as illustrated in Fig. 4, it is preferable to form each corner portion 17 such that the corresponding receiving member 19 is fixed to the corner portion 17 at a rear portion and a side portion of the receiving member 19. This configuration also restricts the flexure of the vehicle body frame 10 caused by the force applied by the shock absorbers and suspension springs.
- In the support structure for the vehicle suspension device of the illustrated embodiment, the upper end of each suspension unit 18, which is formed as an integral body of the corresponding shock absorber and suspension spring, is coupled to the receiving member 19. However, in the support structure for the vehicle suspension device, the upper end of only one of the shock absorber and the suspension spring may be coupled to the receiving member 19.

## Claims

1. A support structure for a vehicle suspension device in which
an upper end of a shock absorber (18a) or a suspension spring (18b) is coupled to a receiving member fixed to a vehicle body frame (10), whereby the vehicle body frame (10) includes a lower frame member (11) having a rectangular cross-section and an upper frame member (12) attached to and arranged above the lower frame member (11) through welding or bolt fastening, the support structure being **characterized in that** the upper frame member (12) has
a substantially inverted-U-shaped first frame portion (14) mounted upright on the lower frame member (11),
a substantially U-shaped second frame portion (15) extending forward from a middle portion of the first frame portion (14) in an up-and-down direction, and
a third frame portion (16) mounted upright on the lower frame member (11) to support a front portion of the second frame portion (15),
the vehicle body frame (10) includes a closed loop portion having a corner portion (17), the closed loop portion is configured by the second frame portion (15) and an upper portion of the first frame portion (14), and
the receiving member (19) is fixed to the corner portion (17) of the loop portion at a front portion and a side portion of the receiving member or at a rear portion and a side portion of the receiving member.

2. The support structure according to claim 1, **characterized in that** the receiving member is fixed to an inner side of the corner portion (17).

3. The support structure according to claim 1 or 2, **characterized in that** the upper frame member (12) and second frame portion (15) and third frame portion (16) are formed by a tubular member having a closed cross section.

4. The support structure according to claim 3, **characterized in that** the tubular member is a round pipe.

## Patentansprüche

1. Trägerstruktur für eine Fahrzeugaufhängungsvorrichtung, wobei ein oberes Ende eines Stoßdämpfers (18a) oder einer Aufhängungsfeder (18b) mit einem an einem Fahrzeugaufbaurahmen (10) fixierten Aufnahmeglied gekoppelt ist, wobei der Fahrzeugaufbaurahmen (10) ein unteres Rahmenglied (11) mit einem rechteckigen Querschnitt und ein oberes Rahmenglied (12), das durch Schweißen oder Schraubbefestigung am unteren Rahmenglied (11) befestigt und darüber angeordnet ist, enthält, wobei die Trägerstruktur **dadurch gekennzeichnet ist, dass**
das obere Rahmenglied (12)
einen im Wesentlichen eine umgedrehte U-Form aufweisenden ersten Rahmenteil (14), der aufrecht am unteren Rahmenglied (11) angebracht ist,
einen im Wesentlichen eine U-Form aufweisenden zweiten Rahmenteil (15), der sich von einem mittleren Teil des ersten Rahmenteils (14) in einer Auf- und Abwärtsrichtung nach vorne erstreckt, und
einen dritten Rahmenteil (16), der aufrecht am unteren Rahmenglied (11) zum Abstützen eines vorderen Teils des zweiten Rahmenteils (15) angebracht ist, aufweist,
der Fahrzeugaufbaurahmen (10) einen geschlossenen Schleifenteil mit einem Eckteil (17) enthält, der geschlossene Schleifenteil durch den zweiten Rahmenteil (15) und einen oberen Teil des ersten Rahmenteils (14) konfiguriert wird, und
das Aufnahmeglied (19) am Eckteil (17) des Schlaufenteils an einem vorderen Teil und einem Seitenteil des Aufnahmeglieds oder an einem hinteren Teil und einem Seitenteil des Aufnahmeglieds fixiert ist.

2. Trägerstruktur nach Anspruch 1, **dadurch gekennzeichnet, dass** das Aufnahmeglied an einer Innenseite des Eckteils (17) fixiert ist.

3. Trägerstruktur nach Anspruch 1 oder 2, **dadurch gekennzeichnet, dass** das obere Rahmenglied (12) und der zweite Rahmenteil (15) und der dritte Rahmenteil (16) durch ein röhrenförmiges Glied mit einem geschlossenen Querschnitt gebildet werden.

4. Trägerstruktur nach Anspruch 3, **dadurch gekennzeichnet, dass** das röhrenförmige Glied ein Rundrohr ist.

## Revendications

1. Structure de support pour un dispositif de suspension de véhicule, dans laquelle une extrémité supérieure d'un absorbeur de choc (18a) ou d'un ressort de suspension (18b) est couplée à un élément de réception qui est fixé à un châssis de carrosserie de véhicule (10), moyennant quoi le châssis de carrosserie de véhicule (10) comprend un élément de châssis inférieur (11) présentant une section transversale rectangulaire et un élément de châssis supérieur (12) attaché à et agencé au-dessus de l'élément de châssis inférieur (11) par soudage ou boulonnage,
la structure de support étant **caractérisée en ce que**
l'élément de châssis supérieur (12) comprend une première partie de châssis essentiellement en forme de U inversé (14) montée verticalement sur l'élément de châssis inférieur (11), une deuxième partie de châssis essentiellement en forme de U (15) qui s'étend vers l'avant à partir d'une partie intermédiaire de la première partie de châssis (14) dans une direction de haut en bas, et une troisième partie de châssis (16) montée verticalement sur l'élément de châssis inférieur (11) afin de supporter une partie avant de la deuxième partie de châssis (15),
le châssis de carrosserie de véhicule (10) comprend une partie de boucle fermée présentant une partie de coin (17), la partie de boucle fermée est configurée par la deuxième partie de châssis (15) et une partie supérieure de la première partie de châssis (14), et
l'élément de réception (19) est fixé à la partie de coin (17) de la partie de boucle à une partie avant et une partie latérale de l'élément de réception ou à une partie arrière et une partie latérale de l'élément de réception.

2. Structure de support selon la revendication 1, **caractérisée en ce que** l'élément de réception est fixé à un côté intérieur de la partie de coin (17).

3. Structure de support selon la revendication 1 ou 2, **caractérisée en ce que** l'élément de châssis supérieur (12) et la deuxième partie de châssis (15) et la troisième partie de châssis (16) sont formées par un élément tubulaire qui présente une section transversale fermée.

4. Structure de support selon la revendication 3, **caractérisée en ce que** l'élément tubulaire est un tuyau rond.
